# EUROPEAN PATENT SPECIFICATION

(11) **EP 1 939 471 B1**
(45) Date of publication and mention of the grant of the patent: **01.08.2012**
(21) Application number: 06810301.9
(22) Date of filing: 20.09.2006
(51) Int. Cl.: F16C 19/18, B60B 35/18, F16C 33/60, F16C 33/64, F16C 35/063

(54) **BEARING DEVICE FOR WHEEL**
LAGERVORRICHTUNG FÜR RAD
DISPOSITIF DE ROULEMENT POUR ROUE

(30) Priority: 20.09.2005 JP 2005271532
(43) Date of publication of application: 02.07.2008
(73) Proprietor: NTN Corporation, Osaka-shi, Osaka 550-0003 (JP)
(72) Inventor: KOMORI, Kazuo c/o NTN Corporation, Iwata-shi, Shizuoka 438-8510 (JP)
(74) Representative: Cohausz & Florack
(86) International application number: PCT/JP2006/318605
(87) International publication number: WO 2007/034819

(56) References cited:
- JP-A- 2000 071 705
- JP-A- 2000 110 839
- JP-A- 2001 193 745

## Description

### BACKGROUND OF THE INVENTION

### Field of the Invention

The present invention relates to a bearing apparatus for freely rotatably supporting a wheel of vehicle, and more particularly to a bearing apparatus for a wheel of vehicle which can prevent damages from being caused on balls (i.e. ball damage) of the bearing apparatus when they are run-over during assembly of the bearing apparatus and also can reduce noise generation in the bearing apparatus and improve the life thereof.

### Description of Background Art

In usual, the bearing apparatus for a wheel of vehicle is adapted to freely rotatably support a hub wheel for mounting the wheel via a rolling bearing and it is adopted an inner ring rotation type for a driving wheel and both inner ring rotation and outer ring rotation types for a driven wheel. A double row angular ball bearing is widely used in such a bearing apparatus from reasons that it has a desirable bearing rigidity, high durability against misalignment and small rotation torque required for fuel consumption. The double row angular contact ball bearing has a plurality of balls interposed between a stationary ring and a rotational ring and the balls are contacted with the stationary and rotational rings with being applied a predetermined contact angle.

The bearing apparatus for a wheel of vehicle is broadly classified to a structure of first generation in which a wheel bearing of double row angular contact ball bearing is fitted between a knuckle forming part of a suspension and a hub wheel, a structure of second generation in which a body mounting flange or a wheel mounting flange is directly formed on the outer circumferential surface of an outer member (outer ring), and a structure of third generation in which one of the inner raceway surfaces is directly formed on the outer circumferential surface of the hub wheel.

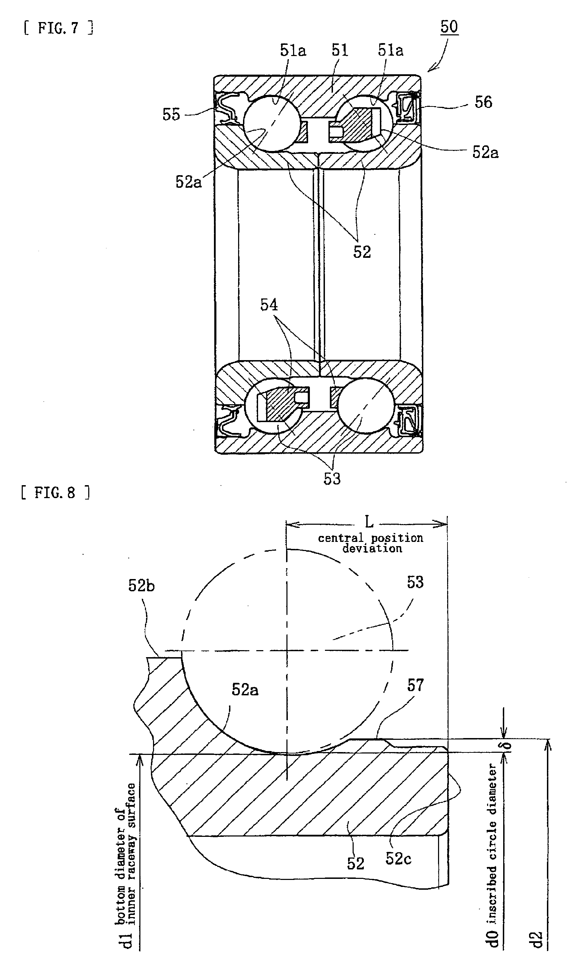

Recently it has been strongly desired for the bearing apparatus for a wheel of vehicle not only improvement of durability and cost reduction but improvement of NVH (i.e. Noise, Vibration and Harshness). As shown in Fig. 7 a wheel bearing 50 used for a bearing apparatus for a wheel of vehicle of the prior art is formed by a double row angular contact ball bearing comprising an outer ring 51 formed on its inner circumferential surface with double row outer raceway surfaces 51a, 51a, a pair of inner rings 52, 52 each formed on its outer circumferential surface with an inner raceway surface 52a oppositely facing to each of the outer raceway surfaces 51a, 51a, a plurality of balls 53, 53 contained between the inner and outer raceway surfaces, and cages 54 for rotatably holding the balls 53. Seals 55, 56 arranged in an annular space between the outer ring 51 and inner rings 52, 52 prevent leakage of lubricating grease sealed within the bearing and ingress of dust or rain water into the bearing from the outside.

Such a bearing 50 is called as the first generation and has counter portions (projections) 57 shown in an enlarged view of Fig. 8 formed near the bottom of the inner raceway surfaces 52a of the inner rings 52 and having an outer diameter larger than a diameter (d1) of the bottom of the inner raceway surface 52a. Accordingly balls 53 interfere with the counter portions 57 when the inner rings 52 are axially moved and thus coming-out of the inner rings 52 is prevented by the counter portions 57. That is, the outer diameter (d2) of the counter portion 57 of the inner ring 52 is formed larger than the inscribed circle diameter (d0) of balls under a supposed condition in which the balls 53 are perfectly held within the outer raceway surface 51a as if they would be contacted with the bottom of the outer raceway surface 51a. Accordingly a so-called "run-over height" δ (one side) is provided.

In addition all of the outer circumferential surface of a shoulder 52b of the inner ring 52, the inner raceway surface 52a, the counter portion 57, and a small end face 52c are simultaneously ground by a formed grinding wheel. Furthermore it has tried to minimize a setting range of the initial gap and thus to reduce the dispersion of an amount of preload of bearing by minimizing the respective dimensional dispersion as well as by limiting the run-over height δ and the central position deviation (L) (i.e. a distance between the bottom of the inner raceway surface 52a and the small end face 52c) to a predetermined value range (see e.g. Japanese laid-open Patent publication No. 193745/2001).

### SUMMARY OF THE INVENTION

### Disclosure of the Invention

### Problems to be solved by the Invention

In the single row angular contact ball bearing, assembly of the bearing can be easily achieved if the run-over height δ is small, but the inner ring will be easily come out. On the contrary if the run-over height δ is large, the assembly of bearing will become difficult and it would be afraid that "run-over damage" (or "ball damage") would be caused on balls during assembly of the bearing. According to the wheel bearing 50 of the prior art, since all of the outer circumferential surface of a shoulder 52b of the inner ring 52, the inner raceway surface 52a, the counter portion 57, and a small end face 52c are simultaneously ground by a formed grinding wheel and the run-over height δ and the central position deviation (L) is limited to a predetermined value range, it is possible to minimize a setting range of the initial gap and thus to reduce the dispersion of an amount of preload. However it is still impossible to effectively prevent the generation of the run-out damage (ball damage).

Accordingly in addition to the problems the wheel bearing 50 of the prior art often causes problem of contact of the balls and the edge of the counter portions 57 during transportation of the wheel bearing or assembly of the wheel bearing to the wheel bearing apparatus of a vehicle. Such contact of balls 53 against the counter portions 57 causes generation of the ball damage especially when heavy shock or vibration is applied to the wheel bearing. In addition since the radially inner portions of balls 53 run over the straight portion of the counter portion 57 during assembly of the wheel bearing 50, micro scratch damages are often caused. Such scratch damage of the balls 53 would cause the problem of NVH and also reduce the life of the bearing.

It is, therefore, an object of the present invention to provide a bearing apparatus for a wheel of vehicle which can prevent the problems of generation of ball damages and NVH and can improve the life of bearing apparatus.

### Means for solving the problems

For achieving the object of the present invention, there is provided, according to claim 1, a bearing apparatus for a wheel of vehicle comprising a double row angular contact ball bearing, an outer member formed on its inner circumferential surface with double row outer raceway surfaces, inner members each formed on its outer circumferential surface with double row inner raceway surfaces oppositely to the double row outer raceway surfaces, and double row balls freely rollably contained between the outer raceway surfaces and inner raceway surfaces, wherein a counter portion is formed near the bottom of each inner raceway surface having an outer diameter larger by a run-over height than a diameter of the bottom of each inner raceway surface, wherein the counter portion is formed by a cylindrical portion axially extending from each inner raceway surface and a tapered portion converging toward the end face of each inner members, characterized in that a smaller cylindrical portion, which has a smaller diameter than the tapered portion, further extends from the tapered portion , that the inner raceway surface, the cylindrical portion, and the tapered portion are ground, and that transitions between the counter portion and the inner raceway surface as well as between the cylindrical portion and the tapered portion are rounded and smoothly continued.

According to the present invention of claim 1, since that a counter portion is formed near the bottom of each inner raceway surface having an outer diameter larger by a run-over height than a diameter of the bottom of each inner raceway surface, that the counter portion is formed by a cylindrical portion axially extending from each inner raceway surface and a tapered portion converging toward the end face of each inner members, and that transitions between the counter portion and the inner raceway surface as well as between the cylindrical portion and the tapered portion are rounded and smoothly continued, it is possible to provide a bearing apparatus for a wheel of vehicle which can prevent generation of the ball damage and contact of balls against the edge of the counter portion during transportation of the wheel bearing and assembly of the wheel bearing to the wheel bearing apparatus of a vehicle and thus can prevent the problem of NVH and improve the life of bearing apparatus.

Preferably as defined in claim 2, the counter portion may be ground simultaneously with the inner raceway surface by a formed grinding wheel. This makes it possible to form a counter portion having a smooth surface without any corner or edge and also to prevent generation of burrs.

It is preferable as defined in claim 3, that the outer diameter of the counter portion may be limited within a predetermined value range so that the run-over height of the counter portion is included within a predetermined range of tolerance. This enables to suppress generation of the ball damage.

Preferably as defined in claim 4, the angle of inclination of the tapered surface may be set at or less than 5°. This makes it possible to smoothly lead the ball from the tapered surface to the cylindrical portion of the counter portion and thus to effectively prevent generation of the scratch damage on ball during assembly of the wheel bearing.

It is also preferable as defined in claim 5 that the inner member may comprise a hub wheel having a wheel mounting flange integrally formed therewith at one end thereof and being formed on its outer circumferential surface with one inner raceway surface oppositely facing to one of said double row outer raceway surfaces and integrally formed with a cylindrical portion axially extending from the inner raceway surface, and an inner ring formed on its outer circumferential surface with the other inner raceway surface oppositely facing to the other of said double row outer raceway surfaces and that the counter portion may be formed near the inner raceway surfaces of the hub wheel and the inner ring respectively. This makes it possible to prevent generation of the ball damage i.e. run-over damage or scratch damage of balls during assembly of the wheel bearing and also possible to seek out the bottom diameter of the inner raceway surface with high accuracy and a short time and thus to improve the workability.

### Effect of the Invention

The bearing apparatus for a wheel of vehicle of the present invention comprises a double row angular contact ball bearing, an outer member formed on its inner circumferential surface with double row outer raceway surfaces, inner members each formed on its outer circumferential surface with double row inner raceway surfaces oppositely to the double row outer raceway surfaces, and double row balls freely rollably contained between the outer raceway surfaces and inner raceway surfaces, wherein a counter portion is formed near the bottom of each inner raceway surface having an outer diameter larger by a run-over height than a diameter of the bottom of each inner raceway surface, wherein the counter portion is formed by a cylindrical portion axially extending from each inner raceway surface and a tapered portion converging toward the end face of each inner members, characterized in that a smaller cylindrical portion, which has a smaller diameter than the tapered portion, further extends from the tapered portion, that the inner raceway surface, the cylindrical portion, and the tapered portion are ground, and that transitions between the counter portion and the inner raceway surface as well as between the cylindrical portion and the tapered portion are rounded and smoothly continued. Accordingly it is possible to provide a bearing apparatus for a wheel of vehicle which can prevent generation of the ball damage and contact of balls against the edge of the counter portion during transportation of the wheel bearing and assembly of the wheel bearing to the wheel bearing apparatus of a vehicle and thus can prevent the problem of NVH and improve the life of bearing apparatus.

### [Best mode for carrying out the invention]

The best mode for carrying out the present invention is a bearing apparatus for a wheel of vehicle comprising a double row angular contact ball bearing, an outer member formed on its inner circumferential surface with double row outer raceway surfaces, inner members each formed on its outer circumferential surface with double row inner raceway surfaces oppositely to the double row outer raceway surfaces, and double row balls freely rollably contained between the outer raceway surfaces and inner raceway surfaces, wherein a counter portion is formed near the bottom of each inner raceway surface having an outer diameter larger by a run-over height than a diameter of the bottom of each inner raceway surface, wherein the counter portion is formed by a cylindrical portion axially extending from each inner raceway surface and a tapered portion converging toward the end face of each inner members, characterized in that a smaller cylindrical portion, which has a smaller diameter than the tapered portion, further extends from the tapered portion, that the inner raceway surface, the cylindrical portion, and the tapered portion are ground, and that transitions between the counter portion and the inner raceway surface as well as between the cylindrical portion and the tapered portion are rounded and smoothly continued.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a wheel of vehicle of the present invention;
- Fig. 2: is a longitudinal section view showing a wheel bearing used in the bearing apparatus of Fig. 1;
- Fig. 3: (a) is an enlarged view of Fig. 2, and Fig. 3 (b) is a further enlarged view of Fig. 3 (a);
- Fig. 4: is an explanatory view showing a grinding work applied to an inner ring after heat treatment thereof;
- Fig. 5: is a longitudinal section view showing a second embodiment of the bearing apparatus for a wheel of vehicle of the present invention;
- Fig. 6: is a longitudinal section view showing a third embodiment of the bearing apparatus for a wheel of vehicle of the present invention;
- Fig. 7: is a longitudinal section view showing a wheel bearing of the prior art; and
- Fig. 8: is an enlarged view showing a portion of the wheel bearing of Fig. 7.

### DESCRIPTION OF THE PREFERRED EMBODIMENTS

### First embodiment

Preferable embodiments of the present invention will be hereinafter described with reference to the drawings.

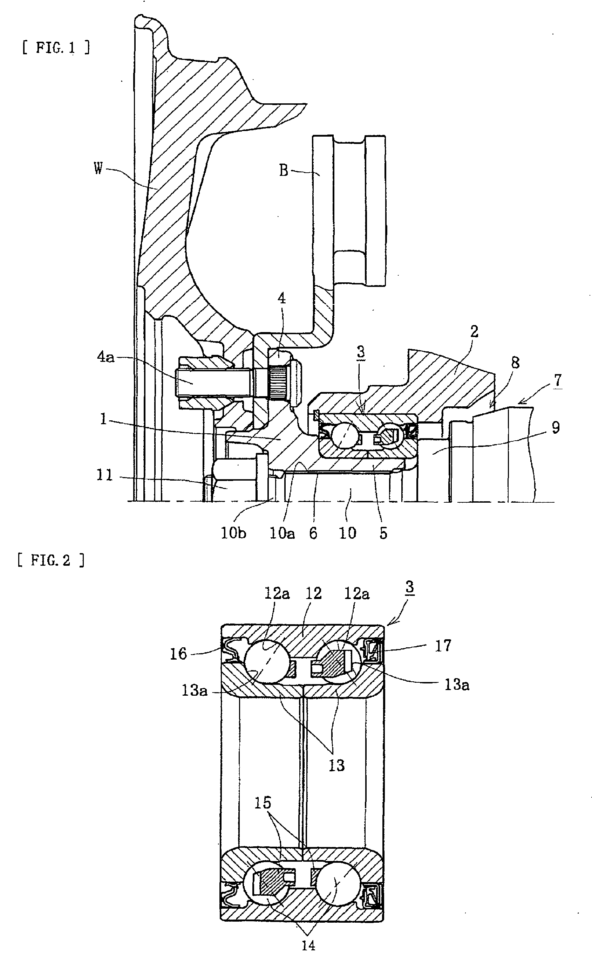

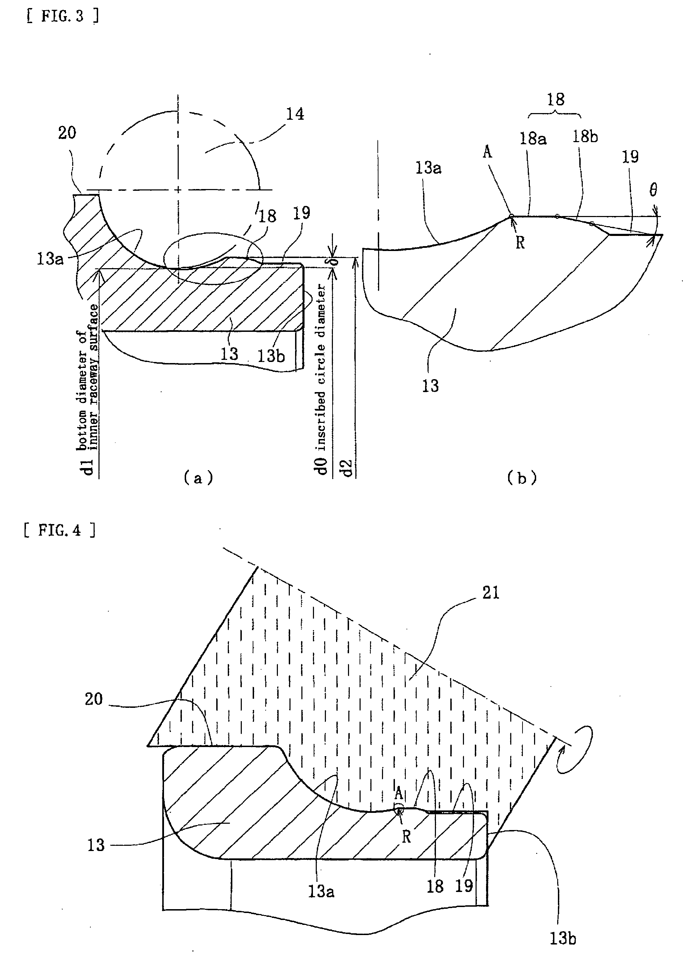

Fig. 1 shows a first embodiment of a bearing apparatus for a wheel of vehicle of the present invention; Fig. 2 is a longitudinal section view showing a wheel bearing used in the bearing apparatus of Fig. 1; Fig. 3 (a) is an enlarged view of Fig. 2; Fig. 3 (b) is a further enlarged view of Fig. 3 (a); and Fig. 4 is an explanatory view showing a grinding work applied to an inner ring after heat treatment thereof. In the description below, a term "outboard side" (left hand side in the drawings) of the apparatus denotes a side which is positioned outside of the vehicle body and a term "inboard side" (right hand side in the drawings) of the apparatus denotes a side which is positioned inside of the body when the bearing apparatus is mounted on the vehicle body.

The bearing apparatus for a wheel of vehicle of the present invention shown in Fig. 1 is a first generation type used for a driving wheel and comprises, as main components, a hub wheel 1, and a wheel bearing 3 for rotatably supporting the hub wheel 1 relative to a knuckle 2. The hub wheel 1 is integrally formed with a wheel mounting flange 4 at its one end and a cylindrical portion 5 extending from the wheel mounting flange 4. Hub bolts 4a for securing a wheel (W) and a brake rotor (B) are equidistantly arranged along the outer circumference of the wheel mounting flange 4. A serration (or spline) 6 is formed on the inner circumferential surface of the hub wheel 1 and a wheel bearing described below is press fitted onto the outer circumferential surface of the cylindrical portion 5 of the hub wheel 1.

The hub wheel 1 is made of medium carbon steel including carbon of 0.40 ∼ 0.80% by weight such as S53C and hardened by high frequency induction quenching so that a region from the base of the wheel mounting flange 6 at its inboard side to the cylindrical portion 5 has surface hardness of 58-64 HRC. This improves the mechanical strength against the rotating bending load applied to the wheel mounting flange 4 and also the anti-fretting performance of the cylindrical portion 5 on which the wheel bearing 3 is press fitted. Accordingly the durability of the hub wheel 1 can be further enhanced.

The wheel bearing 3 is secured with being sandwiched by a shoulder 9 of an outer joint member 8 forming a constant velocity universal joint 7 and the hub wheel 1. The outer joint member 8 is integrally formed with a stem portion 10 and the stem portion 10 is formed with a serration (or spline) 10a on its outer circumferential surface and a thread portion 10b. Torque from an engine can be transmitted to the hub wheel 1 via a driving shaft (not shown), the constant velocity universal joint 7 and the serration 10a of the stem portion 10. A desirable bearing preload can be applied to the wheel bearing 3 by fastening a securing nut 11 onto the thread portion 10b at a predetermined fastening torque.

As shown in an enlarged view of Fig. 2 the wheel bearing 3 is a back-to-back double row angular contact ball bearing which comprises an outer ring (outer member) 12, a pair of inner ring (inner member) 13, 13 fitted in the outer ring 12, and a double row balls 14, 14 contained between the outer and inner rings 12, 13 and is formed with the front face ends of the inner rings 13, 13 being abutted.

The outer ring 12 is made of high carbon chrome bearing steel such as SUJ 2 and formed on its inner circumferential surface with double row outer raceway surfaces 12a, 12a. The inner ring 13 is made of high carbon chrome bearing such as SUJ 2 and formed on its outer circumferential surface with inner raceway surface 13a corresponding to one of the outer raceway surfaces 12a, 12a. A plurality of balls 14, 14 are rollably contained between the outer and inner raceway surfaces 12a, 13a and held there by cages 15, 15. Seals 16, 17 are arranged at both ends of wheel bearing 3 to prevent leakage of grease contained within the bearing 3 and entering of rain water or dusts into the bearing 3.

As clearly shown in an enlarged view of Figs. 3 (a) and (b), the inner ring 13 is formed with a counter portion 18 near the bottom of the inner raceway surface 13a, the counter portion 18 having a predetermined width and a diameter larger than that of the bottom diameter (d1) of the inner raceway surface. The counter portion 18 comprises a cylindrical portion 18a axially extending from the inner raceway surface 13a, and a tapered surface 18b converting from the cylindrical portion 18a toward a small end face 13b. A smaller cylindrical portion 19, which has a smaller diameter than the tapered portion 18b, further extends from the tapered portion 18b. The outer diameter (d2) of the counter portion 18 is formed as having a diameter larger by a predetermined "run-over height" δ (one side) than the inscribed circle diameter (d0) of balls under a supposed condition in which the balls 14 are perfectly held within the outer raceway surface 12a as if they would be contacted with the bottom of the outer raceway surface 12a (i.e. d2 = d0 + 2δ). The inclination angle θ of the tapered surface 18b is set at or less than 5°. This makes it possible to smoothly lead balls 14 from the tapered surface 18b to the cylindrical portion 18a and thus to effectively prevent generation of scratch damage on the balls 14 during assembly of the wheel bearing 3.

The counter portion 18 is formed by a formed grinding wheel which has been defined as having a predetermined configuration and dimension. As shown in Fig. 4, in this embodiment a larger outer diameter 20, the counter portion 18 and the smaller end face 13b are formed by the formed grinding wheel 21 together with the inner raceway surface 13a and the outer diameter (d2) of the counter portion 18 is limited within a predetermined value range so that the run-over height 5 of the counter portion 18 is included within a predetermined range of tolerance. A transition (A) between the inner raceway surface 13a and the counter portion 18 is rounded by a circular arc having a predetermined radius of curvature (R) as well as a transition (i.e. corner portion) between the cylindrical portion 18a and the tapered portion 18b are rounded as having a circular arc and smoothly continued. This makes it possible to prevent generation of burrs and to form the outer diameter (d2) of the counter portion 18 with a high accuracy and without dispersion of dimension. Accordingly it is possible to provide a bearing apparatus for a wheel of vehicle which can prevent generation of the ball damage and contact of balls against the edge of the counter portion during transportation of the wheel bearing and assembly of the wheel bearing to the wheel bearing apparatus of a vehicle and thus can prevent the problem of NVH and improve the life of bearing apparatus.

### Second embodiment

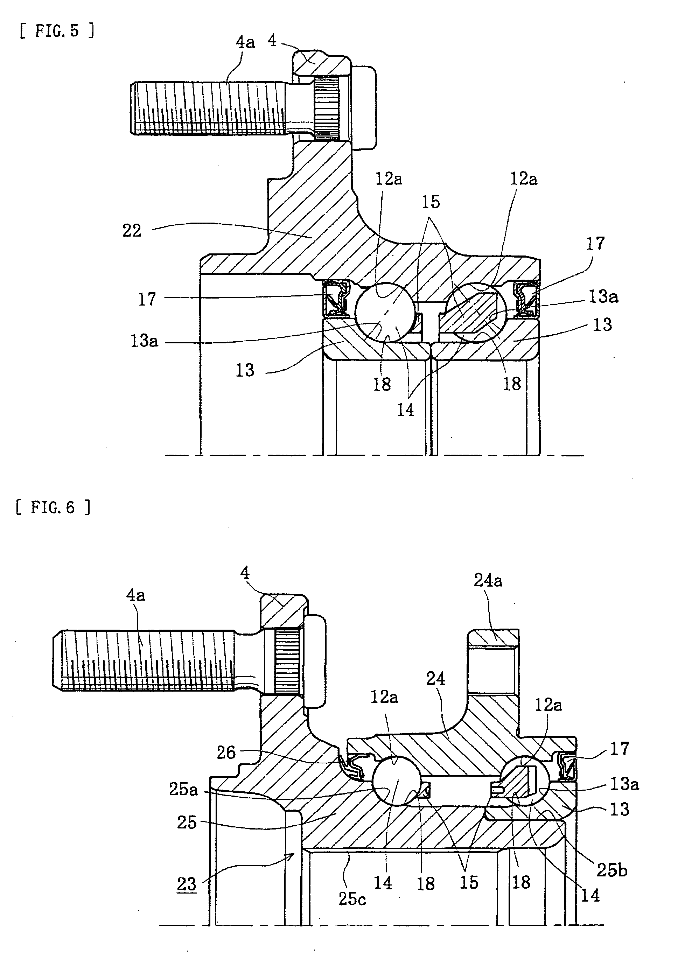

Fig. 5 is a longitudinal view showing a second embodiment of the bearing apparatus for a wheel of the present invention. Same reference numerals are used for designating same parts as those having same functions used in the first embodiment.

This bearing apparatus is a second generation type used for a driven wheel and comprises a hub wheel (outer member) 22, a pair of inner rings 13, 13, double row balls 14, 14 freely rollably contained between the hub wheel 22 and the inner ring 13 via cages 15, and seals 17, 17 arranged at both ends of the hub wheel 22.

The hub wheel 22 is made of medium carbon steel including carbon of 0.40 ∼ 0.80% by weight such as S53C and formed on its outboard side end with a wheel mounting flange 4 and double row outer raceway surfaces 12a, 12a on its inner circumferential surface. A region including the base of the wheel mounting flange 4 at its inboard side and the double row outer raceway surfaces 12a, 12a is hardened by high frequency induction quenching so as to have surface hardness of 58 ∼ 64 HRC.

Also in this embodiment the counter portion 18 having a predetermined run-over height δ is formed by a formed grinding wheel so that the counter portion 18 has a predetermined configuration and dimension. This makes it possible to prevent generation of burrs and to form the outer diameter of the counter portion 18 with a high accuracy and without dispersion of dimension.

### Third embodiment

Fig. 6 is a longitudinal view showing a third embodiment of the bearing apparatus for a wheel of the present invention. This embodiment is different from the previous embodiments only in the structure of the wheel bearing and thus same reference numerals are used for designating same parts as those having same functions used in the previous embodiments.

This bearing apparatus is a third generation type used for a driving wheel and comprises an inner member 23, an outer member 24, and double row balls 14, 14 freely rollably contained between the outer and inner members 23, 24. The inner member 23 comprises a hub wheel 25, and the inner ring 13 press fitted onto the hub wheel 25 via a predetermined interference.

The hub wheel 25 is integrally formed with a wheel mounting flange 4 at its outboard side end, an inner raceway surface 25a on its outer circumferential surface, and cylindrical portion 25 extending from the inner raceway surface 25a. In addition a serration (or spline) 25c is formed on the inner circumferential surface for torque transmission.

The outer member 24 is integrally formed on its outer circumferential surface with a body mounting flange 24a to be mounted on a body (not shown) of a vehicle and on its inner circumferential surface with double row outer raceway surfaces 12a, 12a. Seals 26, 17 are arranged at both ends of the outer member 24 to prevent leakage of grease contained within the bearing apparatus and entering of rain water or dusts into the bearing apparatus.

The hub wheel 25 is made of medium carbon steel including carbon of 0.40 ∼ 0.80% by weight such as S53C and hardened by high frequency induction quenching so that a region including a seal land portion on which the outboard side seal 26 contacts, the inner raceway surface 25a, and the cylindrical portion 25b has surface hardness of 58-64 HRC.

The outer member 24 is made of medium carbon steel including carbon of 0.40 ∼ 0.80% by weight such as S53C and is hardened by high frequency induction quenching so that the double row outer raceway surface 12a, 12a has surface hardness of 58 ∼ 64 HRC.

After the heat treatment, the counter portion 18 is formed on the hub wheel 25 and the inner ring 13 by a formed grinding wheel so that the counter portion 18 has a predetermined configuration and dimension. This makes it possible to prevent generation of burrs and to form the counter portion 18 with a high accuracy and without dispersion of dimension.

In this bearing apparatus of the third generation since the inner ring 13 is press fitted onto the cylindrical portion 25b of the hub wheel 25, the inner ring 13 does never move or vibrate itself after or during assembly of bearing apparatus, transportation or assembly of the bearing apparatus to a vehicle at an automobile manufacturer. Thus although the counter portion 18 for preventing coming-out of the inner ring 13 is not necessary, the provision of the counter portion 18 makes it possible to easily and accurately seek out the bottom of the inner raceway surface 13a of the inner ring 13 and the inner raceway surface 25a of the hub wheel 25 during a measuring step.

### [Applicability in industries]

The bearing apparatus for a wheel of vehicle provided with the counter portion can be applied to the bearing apparatus of first, second and third generations nevertheless it is used either for the driving wheel or for driven wheel.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

### BRIEF DESCRIPTION OF THE DRAWINGS

Fig. 1 is a longitudinal section view showing a first embodiment of the bearing apparatus for a wheel of vehicle of the present invention;
Fig. 2 is a longitudinal section view showing a wheel bearing used in the bearing apparatus of Fig. 1;
Fig. 3 (a) is an enlarged view of Fig. 2, and Fig. 3 (b) is a further enlarged view of Fig. 3 (a);
Fig. 4 is an explanatory view showing a grinding work applied to an inner ring after heat treatment thereof;
Fig. 5 is a longitudinal section view showing a second embodiment of the bearing apparatus for a wheel of vehicle of the present invention;
Fig. 6 is a longitudinal section view showing a third embodiment of the bearing apparatus for a wheel of vehicle of the present invention;
Fig. 7 is a longitudinal section view showing a wheel bearing of the prior art; and
Fig. 8 is an enlarged view showing a portion of the wheel bearing of Fig. 7.

1, 22, 25: hub wheel
2: knuckle
3: wheel bearing
4: wheel mounting flange
4a: hub bolts
5, 25b: cylindrical portion
6, 10a, 25c: serration
7: constant velocity universal joint
8: outer joint member
9: shoulder
10: stem portion
10b: thread portion
11: securing nut
12: outer ring
12a: outer raceway surface
13: inner ring
13a, 25a: inner raceway surface
13b: small end face
14: balls
15: cages
16, 17, 26: seals
18: counter portion
18a: cylindrical portion
18b: tapered portion
19: smaller cylindrical portion
20: larger outer diameter
21: formed grinding wheel
23: inner member
24: outer member
24a: body mounting flange
50: wheel bearing
51: outer ring
51a: outer raceway surface
52: inner ring
52a: inner raceway surface
52b: shoulder
52c: small end face
53: balls
54: cages
55, 56: seals
57: counter portion
A: transition
B: brake rotor
d0: inscribed circle diameter
d1: bottom diameter of the inner raceway surface
d2: outer diameter of the counter portion
L: central position deviation
W: wheel
δ: run-over height
θ: inclination angle

## Claims

1. A bearing apparatus for a wheel of vehicle comprising:
- a double row angular contact ball bearing (3),
- an outer member (12, 22, 24) formed on its inner circumferential surface with double row outer raceway surfaces (12a),
- inner members (13, 25) each formed on its outer circumferential surface with double row inner raceway surfaces (13a, 25a) oppositely to the double row outer raceway surfaces (12a), and double row balls (14) freely rollably contained between the outer raceway surfaces (12a) and inner raceway surfaces (13a, 25a),
- wherein a counter portion (18) is formed near the bottom of each inner raceway surface (13a, 25a) having an outer diameter (d2) larger by a run-over height (δ) than a diameter (d1) of the bottom of each inner raceway surface (13a, 25a),
- wherein the counter portion (18) is formed by a cylindrical portion (18a) axially extending from each inner raceway surface (13a, 25a) and a tapered portion (18b) converging toward the end face (13b) of each inner member (13, 25),
**characterized in**
- **that** a smaller cylindrical portion (19), which has a smaller diameter than the tapered portion (18b), further extends from the tapered portion (18b),
- **that** the inner raceway surface (13a, 25a), the cylindrical portion (18a), and the tapered portion (18b) are ground, and
- **that** transitions between the counter portion (18) and the inner raceway surface (13a, 25a) as well as between the cylindrical portion (18a) and the tapered portion (18b) are rounded and smoothly continued.

2. A bearing apparatus for a wheel of vehicle of claim 1
wherein the counter portion (18) is ground simultaneously with the inner raceway surface (13a, 25a) by a formed grinding wheel.

3. A bearing apparatus for a wheel of vehicle of claim 1 or 2 wherein the outer diameter (d2) of the counter portion (18) is limited within a predetermined value range so that the run-over height (δ) of the counter portion (18) is included within a predetermined range of tolerance.

4. A bearing apparatus for a wheel of vehicle of any one of claims 1-3 wherein the angle of inclination of the tapered surface (18b) is set at or less than 5°.

5. A bearing apparatus for a wheel of vehicle of any one of claims 1-4 wherein the inner member comprises a hub wheel (25) having a wheel mounting flange (4) integrally formed therewith at one end thereof and being formed on its outer circumferential surface with one inner raceway surface (25a) oppositely facing to one of said double row outer raceway surfaces (12a) and integrally formed with a cylindrical portion (25b) axially extending from the inner raceway surface (25a), and an inner ring (13) formed on its outer circumferential surface with the other inner raceway surface (13a) oppositely facing to the other of said double row outer raceway surfaces (12a) and wherein the counter portion (18) is formed near the inner raceway surfaces (25a, 13a) of the hub wheel (25) and the inner ring (13) respectively.

## Patentansprüche

1. Lagervorrichtung für ein Fahrzeugrad, welche umfasst:
- ein zweireihiges Schrägkugellager (3),
- ein äußeres Element (12, 22, 24), das auf seiner Innenumfangsfläche mit zweireihigen äußeren Laufbahnflächen (12a) ausgebildet ist,
- innere Elemente (13, 25), die jeweils auf ihrer Außenumfangsfläche mit zweireihigen inneren Laufbahnflächen (13a, 25a), die den zweireihigen äußeren Laufbahnflächen (12a) gegenüberliegen, ausgebildet sind, und zweireihige Kugeln (14), die frei rollbar zwischen den äußeren Laufbahnflächen (12a) und inneren Laufbahnflächen (13a, 25a) enthalten sind,
- wobei ein Gegenabschnitt (18) in der Nähe des Bodens jeder inneren Laufbahnfläche (13a, 25a) ausgebildet ist, der einen Außendurchmesser (d2) aufweist, der um eine Überlaufhöhe (run-over height) (δ) größer als ein Durchmesser (d1) des Bodens jeder inneren Laufbahnfläche (13a, 25a) ist,
- wobei der Gegenabschnitt (18) durch einen zylindrischen Abschnitt (18a), der sich von jeder inneren Laufbahnfläche (13a, 25a) aus axial erstreckt, und einen konisch zulaufenden Abschnitt (18b), der sich in Richtung der Endfläche (13b) jedes inneren Elements (13, 25) verjüngt, gebildet wird,
**dadurch gekennzeichnet,**
- **dass** ein kleinerer zylindrischer Abschnitt (19), welcher einen kleineren Durchmesser als der konisch zulaufende Abschnitt (18b) aufweist, sich von dem konisch zulaufenden Abschnitt (18b) aus weiter erstreckt,
- **dass** die innere Laufbahnfläche (13a, 25a), der zylindrische Abschnitt (18a) und der konisch zulaufende Abschnitt (18b) geschliffen sind, und
- **dass** Übergänge zwischen dem Gegenabschnitt (18) und der inneren Laufbahnfläche (13a, 25a) sowie zwischen dem zylindrischen Abschnitt (18a) und dem konisch zulaufenden Abschnitt (18b) gerundet und glatt fortgesetzt sind.

2. Lagervorrichtung für ein Fahrzeugrad nach Anspruch 1, wobei der Gegenabschnitt (18) gleichzeitig mit der inneren Laufbahnfläche (13a, 25a) mittels einer Formschleifscheibe geschliffen wird.

3. Lagervorrichtung für ein Fahrzeugrad nach Anspruch 1 oder 2, wobei der Außendurchmesser (d2) des Gegenabschnitts (18) innerhalb eines vorbestimmten Wertebereichs begrenzt ist, so dass die Überlaufhöhe (δ) des Gegenabschnitts (18) innerhalb eines vorbestimmten Toleranzbereichs liegt.

4. Lagervorrichtung für ein Fahrzeugrad nach einem der Ansprüche 1-3, wobei der Neigungswinkel der konisch zulaufenden Fläche (18b) gleich oder kleiner als 5° gewählt ist.

5. Lagervorrichtung für ein Fahrzeugrad nach einem der Ansprüche 1-4, wobei das innere Element umfasst: eine Radnabe (25), das einen einem Ende desselben einstückig mit ihm ausgebildeten Radmontageflansch (4) aufweist und auf seiner Außenumfangsfläche mit einer inneren Laufbahnfläche (25a) ausgebildet ist, die einer von den zweireihigen äußeren Laufbahnflächen (12a) gegenüberliegt und mit einem sich von der inneren Laufbahnfläche (25a) aus axial erstreckenden zylindrischen Abschnitt (25b) einstückig ausgebildet ist, und einen Innenring (13), der auf seiner Außenumfangsfläche mit der anderen inneren Laufbahnfläche (13a) ausgebildet ist, die der anderen von den zweireihigen äußeren Laufbahnflächen (12a) gegenüberliegt, und wobei der Gegenabschnitt (18) in der Nähe der inneren Laufbahnflächen (25a, 13a) der Radnabe (25) bzw. des Innenrings (13) ausgebildet ist.

## Revendications

1. Dispositif à roulements pour une roue de véhicule, comprenant :
- un roulement à billes à contact oblique (3) à double rangée,
- un élément extérieur (12, 22, 24) formé sur sa circonférence intérieure avec des surfaces (12a) de chemins de roulements extérieurs à double rangée,
- des éléments intérieurs (13, 25), chacun d'eux étant formé sur sa surface circonférentielle extérieure avec des surfaces (13a, 25a) de chemins de roulements intérieurs à double rangée placées à l'opposé des surfaces (12a) de chemins de roulements extérieurs à double rangée, et des billes (14) à double rangée contenues en pouvant rouler librement entre les surfaces (12a) de chemins de roulements extérieurs et les surfaces (13a, 25a) de chemins de roulements intérieurs,
- dans lequel une partie saillante (18) est formée à proximité du bas de chaque surface (13a, 25a) de chemin de roulement intérieur ayant un diamètre extérieur (d2) plus grand d'une hauteur de dépassement (δ), par rapport à un diamètre (d1) du bas de chaque surface (13a, 25a) de chemin de roulement intérieur,
- dans lequel la partie saillante (18) est formée par une partie cylindrique (18a) s'étendant axialement à partir de chaque surface (13a, 25a) de chemin de roulement intérieur, et par une partie conique (18b) convergeant vers la face d'extrémité (13b) de chaque élément intérieur (13, 25),
**caractérisé**
**en ce qu'**une partie cylindrique (19) plus petite, qui a un diamètre plus petit que celui de la partie conique (18b), s'étend en outre à partir de la partie conique (18b), en ce que la surface (13a, 25a) de chemin de roulement intérieur, la partie cylindrique (18a) et la partie conique (18b) sont meulées, et
**en ce que** des transitions sont arrondies et profilées en se continuant de façon aplanie, entre la partie saillante (18) et la surface (13a, 25a) de chemin de roulement intérieur, ainsi qu'entre la partie cylindrique (18a) et la partie conique (18b).

2. Dispositif à roulements pour une roue de véhicule selon la revendication 1, dans lequel la partie saillante (18) est meulée simultanément avec la surface (13a, 25a) de chemin de roulement intérieur, par une meule de forme.

3. Dispositif à roulements pour une roue de véhicule selon la revendication 1 ou 2, dans lequel le diamètre extérieur (d2) de la partie saillante (18) est limité à l'intérieur d'une plage de valeurs prédéterminées, de sorte que la hauteur de dépassement (δ) de la partie saillante (18) est comprise à l'intérieur d'une plage de tolérance prédéterminée.

4. Dispositif à roulements pour une roue de véhicule selon l'une quelconque des revendications 1 à 3, dans lequel l'angle d'inclinaison de la surface conique (18b) est réglé à 5° ou moins.

5. Dispositif à roulements pour une roue de véhicule selon l'une quelconque des revendications 1 à 4, dans lequel l'élément intérieur comprend une roue à moyeu (25) ayant une bride de fixation de roue (4) formée de façon solidaire avec cette roue à moyeu au niveau de l'une de ses extrémités, ladite roue à moyeu étant formée sur sa surface circonférentielle extérieure avec une surface (25a) de chemin de roulement intérieur faisant face, à l'opposé, à l'une desdites surfaces (12a) de chemins de roulement extérieurs à double rangée et formée de façon solidaire avec une partie cylindrique (25b) s'étendant axialement à partir de la surface (25a) de chemin de roulement intérieur, et comprenant une bague intérieure (13) formée sur sa surface circonférentielle extérieure avec l'autre surface (13a) de chemin de roulement intérieur faisant face, à l'opposé, à l'autre desdites surfaces (12a) de chemins de roulement extérieurs à double rangée, et dans lequel la partie saillante (18) est formée, respectivement, à proximité des surfaces (25a, 13a) de chemins de roulement intérieurs de la roue à moyeu (25) et de la bague intérieure (13).
